# EUROPEAN PATENT SPECIFICATION

(11) **EP 0 907 522 B1**
(45) Date of publication and mention of the grant of the patent: **31.07.2002**
(21) Application number: 97926703.6
(22) Date of filing: 27.05.1997
(51) Int. Cl.: B60K 28/14, F02D 17/04, B60R 21/00

(54) **CONTROLLER FOR VEHICULAR SAFETY DEVICE**
STEUERGERÄT FÜR EIN FAHRZEUG-SICHERHEITSSYSTEM
DISPOSITIF DE COMMANDE DE DISPOSITIF DE SECURITE POUR VEHICULE

(30) Priority: 24.06.1996 US 673760; 13.05.1997 US 855329
(43) Date of publication of application: 14.04.1999
(73) Proprietor: BREED AUTOMOTIVE TECHNOLOGY, INC., Lakeland, FL 33807-3050 (US)
(72) Inventor: HALASZ, Peter, Tancred, Brownsville, TX 78521 (US); HUSBY, Harald, Snore, Lakeland, FL 33813 (US)
(74) Representative: Müller-Boré & Partner Patentanwälte
(86) International application number: US9708779
(87) International publication number: WO9749571

(56) References cited:
- EP-A- 0 398 307
- EP-A- 0 498 312
- EP-A- 0 536 996
- FR-A- 2 571 000
- GB-A- 2 292 126
- US-A- 3 833 084
- US-A- 4 549 277
- US-A- 4 783 237
- US-A- 5 446 658
- US-A- 5 481 139
- US-A- 5 483 449

## Description

This invention relates to a control device to selectively actuate at least one vehicular safety device when a sudden change in acceleration, pitch angle or roll angle of a vehicle is detected.

Accelerometers that measure pitch and roll angles along a predetermined axis and produce signals representative of such measurements are well known in the art. Likewise, filtering, digitizing, formulating and analyzing the accelerometer signals to assess whether certain action should be taken is also known. These concepts have been disclosed in numerous patents in the fields of motor vehicle suspension control, motor vehicle body roll compensation, roll-over bar activation systems and seat belt pretension systems.

Studies indicate that injuries in motor vehicle accidents, especially at high speeds, can be substantially reduced by the use of occupant restraint systems. These systems commonly include a seat belt pretensioner assembly which is operable to move a seat belt assembly through a pretensioning stroke to remove slack from the seat belt during abrupt changes in an automobile's position. When the motor vehicle is subjected to a sudden change in position relative to the driving surface, caused either by a roll-over or pitch-over, the seat belt pretensioner is actuated to tightly restrain the occupants in a position to minimize movement and prevent contact between the seat occupant and the automobile interior such as the roof, windshield, steering wheel, and side doors. Since an important element of such protective systems is the sensing system which activates the seat belt pretensioner mechanism, the position of the motor vehicle relative to the driving surface must be carefully and precisely monitored so that the seat belt pretensioner is activated rapidly and reliably before the occupants suffer substantial injury.

Other occupant safety devices employed in motor vehicles to be actuated upon the prediction of a roll-over or a pitch-over may include an airbag, an automatic roll-over bar, automatic door locks, and an emergency radio or telephone transmitter.

US 5 102 162 teaches a suspension control apparatus that maintains a level attitude during cornering and turning by computing and map-retrieving from output signals of a vehicle speed sensor and a yaw angular velocity sensor for detecting angular velocity about a yaw axis of the vehicle.

US 5 471 388 teaches a method and apparatus for preventing vehicle handling instabilities, in which a vehicle yaw angular velocity required value is formed from measured quantities such as vehicle velocity and steering wheel angle.

US 4 549 277 teaches a multiple sensor inclination measuring system which includes a plurality of single and dual axis inclination sensors and an analog-to-digital convertor to convert a sensor signal to a digital word having a binary value representative of the tilt of the sensor.

US 4,784,237 discloses an apparatus for the automatic release of passenger protection devices in motor vehicles in the event of an accident. This apparatus includes sensors to detect the angle of inclination and vertical and angular velocity about the longitudinal and the transverse axes of the vehicle. The angular velocities are plotted over the corresponding angle to receive a threshold for determining a roll-over of the vehicle based on the angular velocity and the corresponding angle. In case of a small angle of inclination a higher angular velocity is necessary to reach a critical position of the vehicle. In case of a high angle of inclination only a small rotational energy, i.e. a small angular velocity is necessary to reach a critical position with the risk of a roll-over of the vehicle.

US 5,446,658 discloses a method and an apparatus for estimating incline and bank angles of a road surface upon which a vehicle is travelling. This apparatus includes longitudinal and lateral accelerometers and speed sensors. Based on outputs from the speed sensors and accelerometers the incline and bank angles of the road surface are calculated. However, this method and apparatus do not refer to a device actuating vehicle safety devices by determining angular velocities about longitudinal and transverse axis of the vehicle.

It is the object of the present invention to provide the control device to selectively actuate a vehicle safety device which allows an improved discrimination of roll-over or pitch-over movement of a motor vehicle.

This object is achieved by a control device having the features defined in claim 1. Preferred embodiments are defined in the dependent subclaims.

There is provided in accordance with the present invention a control device to activate a seat belt pretensioning mechanism and/or other vehicular safety device in case of a motor vehicle roll-over or pitch-over movement.

There is provided in accordance with another aspect of the present invention logic and a method for both sensing and/or predicting roll-over or pitch-over movements in motor vehicles and for activating appropriate vehicular safety devices based on either sensing and/or predicting roll-over, or pitch-over movement.

### BRIEF DESCRIPTION OF THE DRAWINGS

Fig. 1 is a perspective view of a vehicle with the control device of the present invention.
Fig. 2 is a block diagram of the control device of the present invention.
Fig. 3 is a family of curves depicting the probability of a roll-over condition as a function of the roll angle and the rate of change of the roll angle.
Fig. 4 is a map of the family of curves depicted in Fig. 3.
Fig. 5 is a family of curves depicting the probability of a pitch-over condition as a function of the pitch angle and the rate of change of the pitch angle.
Fig. 6 is a map of the family of curves depicted in Fig. 5.
Figs. 7A and 7B show a flow chart depicting the operation of the control device of the present invention.

Similar reference characters refer to similar parts throughout the several views of the drawings.

### DETAILED DESCRIPTION OF THE INVENTION

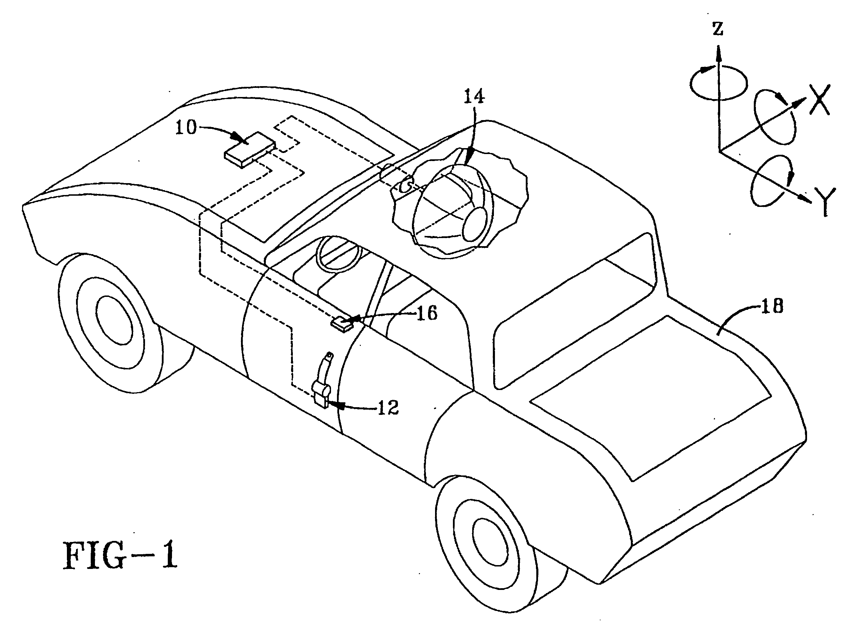

As shown in Fig. 1, the present invention relates to a control device 10 to selectively actuate at least one vehicular safety device such as a seat belt pretensioning mechanism 12, an airbag 14 or an automatic door lock 16 of a vehicle 18.

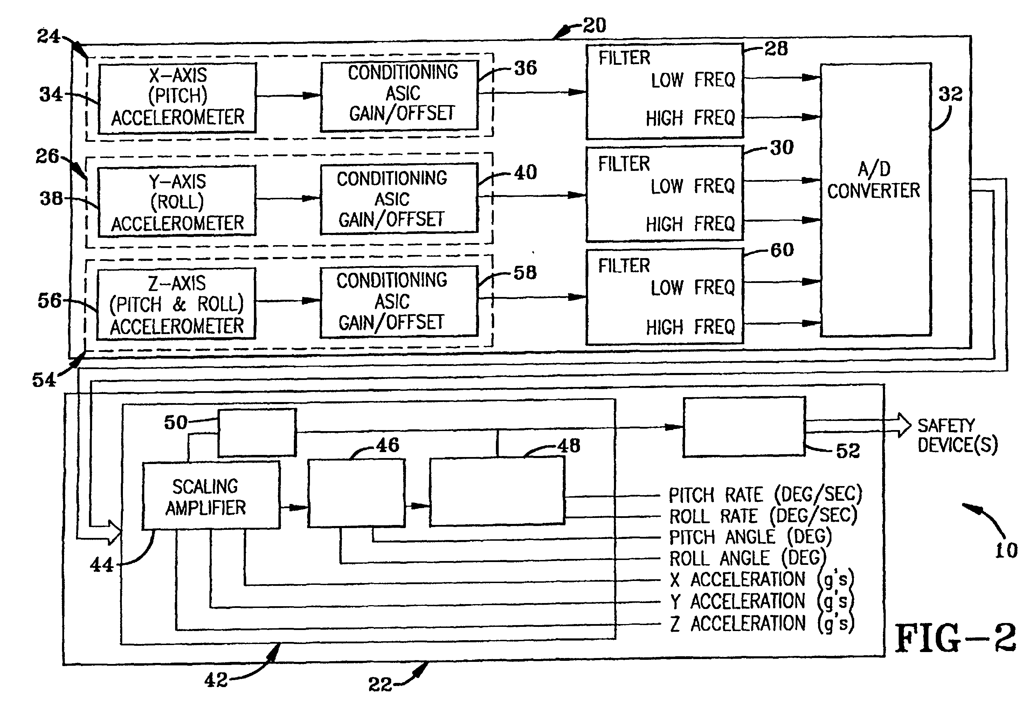

As shown in Fig. 2, the control device 10 comprises a sensor means 20 to sense a plurality of parameters including acceleration, pitch and roll angles of the vehicle as defined hereinafter and to generate a corresponding plurality of digital signals representing each such parameter. A control means 22 comprises a control signal generator means including control logic circuitry to receive the plurality of digital signals and to generate a control signal corresponding to each such parameter when the corresponding digital signal exceeds a predetermined value. A safety device actuator signal generator means includes actuator logic circuitry to receive the control signals and to generate a corresponding actuator signal to actuate the corresponding vehicular safety device 12, 14, or 16 as described more fully hereinafter.

For convention, an angle of inclination is defined as the rotation of an object with respect to the Earth's surface. Two angles, roll and pitch, completely describe the inclination of an object such as a vehicle with respect to the Earth's surface. With reference to the control device 10 of the present invention, three single axis micromachined capacitive type accelerometers may be used for measuring these angles.

As shown in Fig. 1, the pitch angle, or inclination, of the longitudinal center line of the vehicle 18 relative to the roadway is measured about the X-axis and the roll angle or inclination of the transverse center line of the vehicle 18 is measured about the Y-axis. As described more fully hereinafter, the control device 10 measures pitch and roll angles of inclination and calculates the pitch and roll angle rates of change to predict when the vehicle will rotate through a predetermined arc about the X-axis (pitch) or Y-axis (roll) defined as a pitch-over condition and a roll-over condition respectively. These calculations are dependent on several constants which vary with different makes and models of vehicles. These constraints include the weight, the center of gravity, the height, width, and length and other characteristics such as acceleration and braking of the vehicle 18. In certain conditions, such as panic braking, vehicle spin (yaw) and sliding, the data from the Z-axis accelerometer will be used to augment the data from the X and Y axis accelerometers to improve the discriminating and predictive ability of the device.

The control device 10 comprises a sensing means 20 and a control means 22. As shown in Fig. 2, the sensing means 20 comprises a first 24, second 26 and third 54 sensing elements, corresponding first 28, second 30 and third 60 high and low frequency filters, and an A/D converter 32. The first sensing element 24 comprises an X-axis accelerometer 34 and a corresponding conditioning Application Specific Integrated Circuit (ASIC) 36. The second sensing element 26 comprises a Y-axis accelerometer 38 and a corresponding conditioning ASIC 40. The third sensing element 54 comprises a Z-axis accelerometer 56 and a corresponding conditioning ASIC 58. As previously described, the X-axis accelerometer 34, the Y-axis accelerometer 38 and the Z-axis accelerometer 56 generate analog signals corresponding to the angular inclination or disposition of the vehicle 18 relative to the roadway. The conditioning ASICs 36, 40, and 58 calibrate the corresponding analog signals from the X-axis accelerometer 34, the Y-axis accelerometer 38 and the Z-axis accelerometer 56, such as a ratio of 1 G to 1 volt. Of course, as previously mentioned, a three axis accelerometer is equally suitable. The first, second and third filters 28, 30 and 60 filter the corresponding analog signals from the first, second and third sensing elements 24, 26 and 56 respectively into a first, or low frequency, band width such as from about 0 Hz to about 40 Hz corresponding to or representing the angles of inclination to the X-axis and Y-axis relative to the roadway indicative of the pitch and roll condition of the vehicle respectively and a second or high frequency band width such as from about 0 Hz to about 2000 Hz corresponding to or representing acceleration indicative of an impact due to a collision. The low and high frequency analog signals from both the first, second and third filters 28, 30 and 60 are digitized by the A/D converter 32.

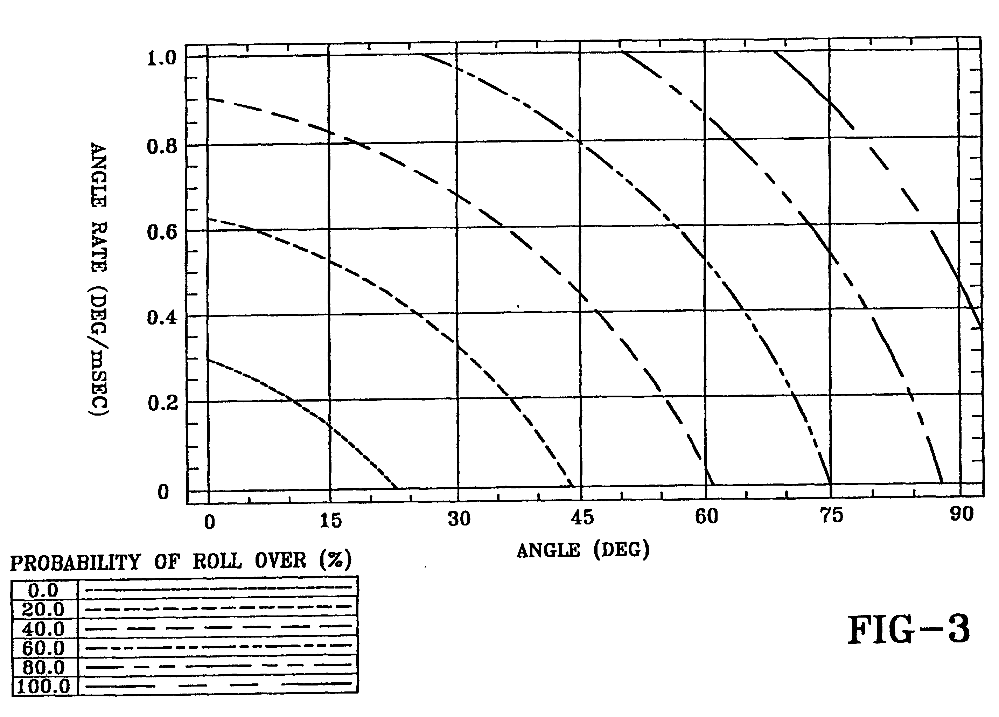

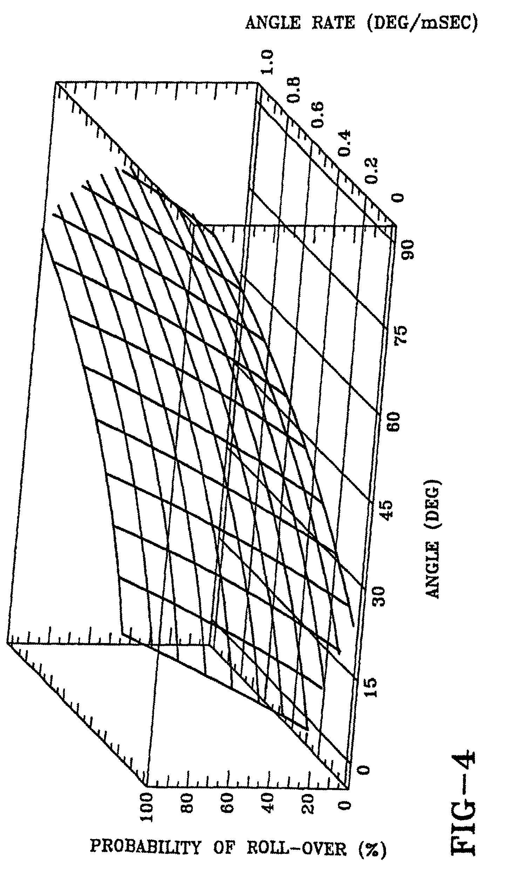

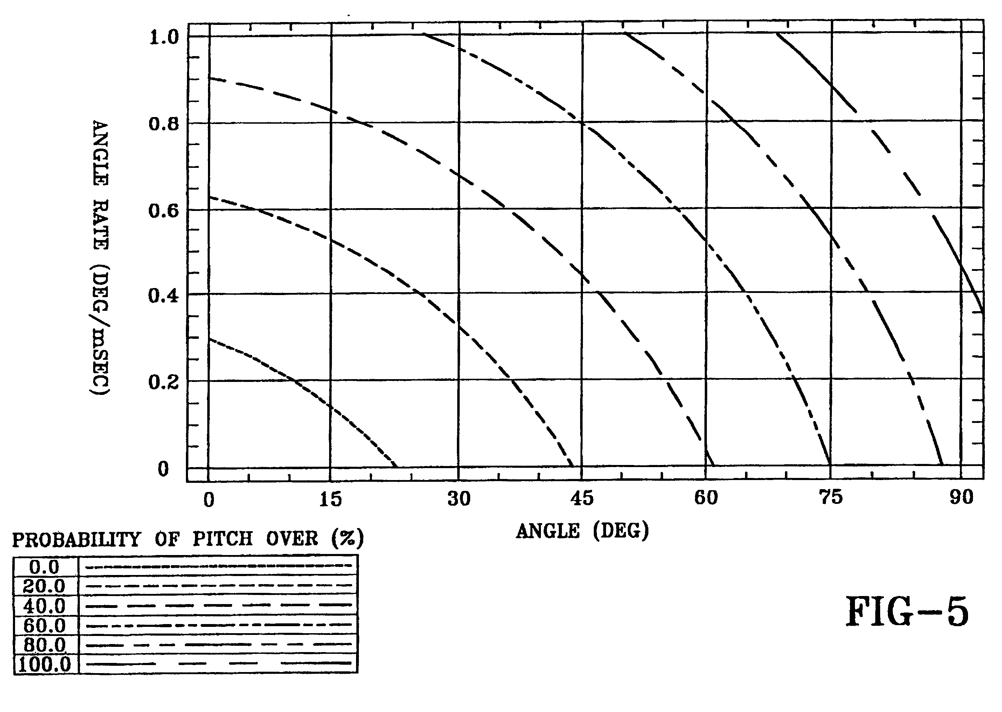

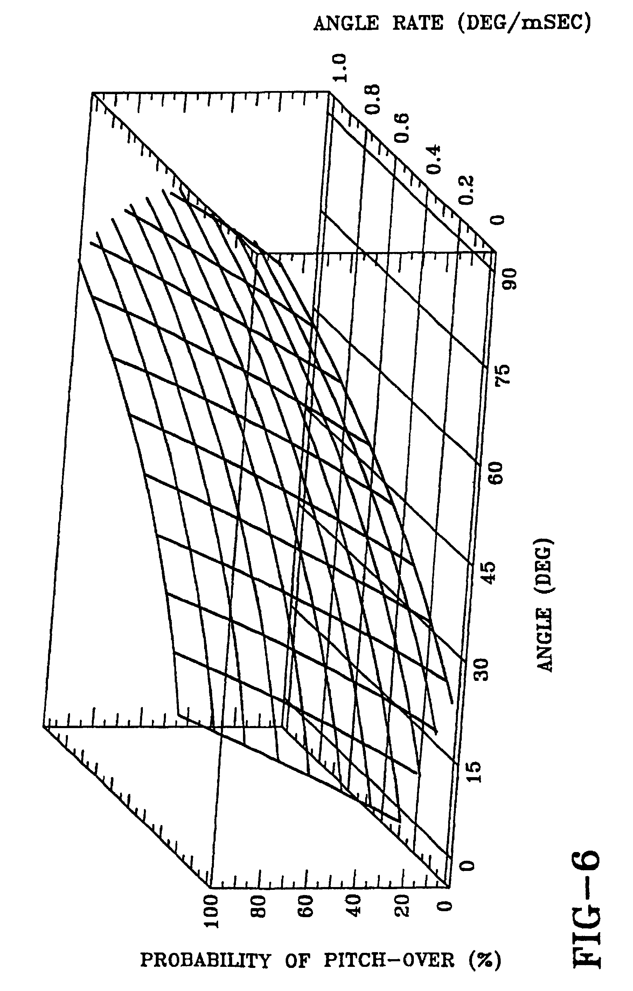

As shown in Fig. 2, the control means 22 comprises a control signal generator means 42 including a scaling amplifier 44, a first control signal generator comprising a first stage 46 and a second stage 48 to receive the first frequency signals from the first, second and third filters 28, 30 and 60 and a second control signal generator 50 to receive the second frequency signal from the first second and third filters 28, 30, and 60 and an actuator signal generator means 52. The scaling amplifier 44 scales and amplifies the digitized signals received from the sensing means 20 corresponding to the pitch and roll angles of inclination along the X-axis and Y-axis respectively. The first stage 46 of the first control signal generator includes logic means to generate a pitch angle signal and a roll angle signal corresponding to the angle of inclination of the vehicle relative to the roadway along the X-axis and Y-axis respectively. The pitch and roll angle signals are fed to the second stage 48 including storage means to store the families of curves shown in Figs. 3 and 5 and the maps shown in Figs. 4 and 6, and means to generate the rate of change of the pitch angle and rate of change of the roll angle. The first control signal generator means further includes logic circuitry to generate a first control signal when either the pitch angle and pitch angle rate each exceeds a predetermined value indicative of a pitch-over condition or when the roll angle and roll angle rate each exceeds a predetermined value indicative of a roll-over condition by comparing the pitch angle and pitch angle rate to predetermined values of pitch angle and pitch angle rate as depicted by the family of curves of Fig. 3 and the map shown in Fig. 4 and the roll angle and roll angle rate to predetermined values of roll angle rate as depicted by the family of curves of Fig. 5 and the map shown in Fig. 6 respectively.

The actuator signal generator means 52 includes logic means to generate an actuator signal to actuate at least one vehicular safety device selected from the group consisting of an airbag, an automatic roll-over bar, automatic door locks, and an emergency radio or telephone transmitter when the first control signal is received from the first control signal generator means.

The second control signal generator means 50 includes logic means to generate a first control signal when the G force sensed by the sensor means 20 exceeds a first predetermined value such as from about 1 G to about 5 G's and a second control signal when the G force sensed by the sensor means 20 exceeds a second predetermined value more than 5 G's. The actuator signal generator means 52 further includes logic means to generate a first actuator signal to actuate at least one of the vehicular safety devices 12, 14 or 16 when the first control signal is received from the second control signal generator means 50 and to generate a second actuator signal to actuate at least one of the other vehicular safety devices 12, 14 and 16 when the second control signal from the second control signal generator means 50 is received.

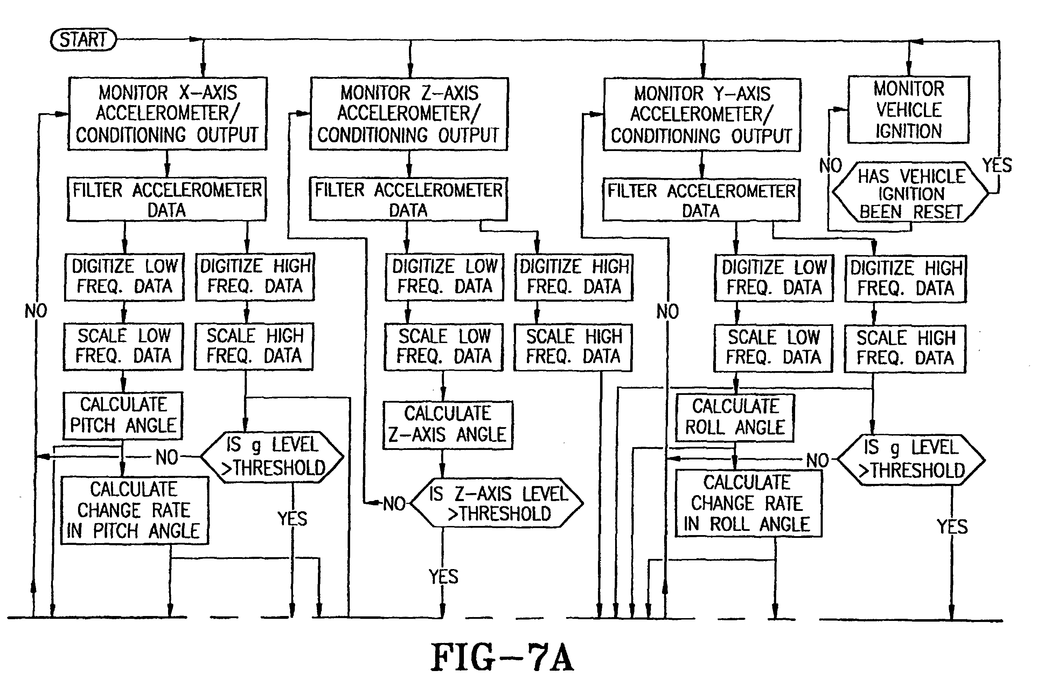

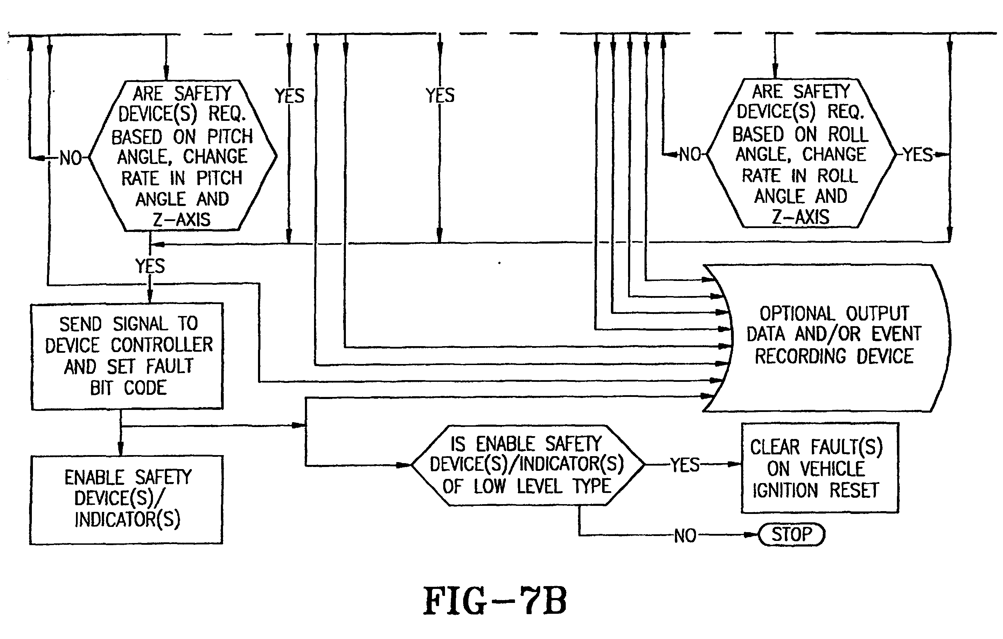

As shown in Figs. 2 and 7, the values of the G forces measured along the X-axis, Y-axis and Z-axis as well as the pitch and roll angles together with the pitch and roll angle rates about the X-axis and Y-axis may be fed to an optional output data and/or event recording device (not shown). The control device 10 may further include a system reset means to clear faults and reset the control device 10 upon ignition key operation.

Although the invention has been described in its preferred embodiment, it is understood that the present disclosure of the preferred embodiment may be changed in details of construction and the combination and arrangement of elements may be departed from without diminishing the scope of the invention as hereinafter claimed.

## Claims

1. A control device (10) to selectively actuate a vehicle safety device (12, 14, 18) comprising:
(a) a sensor means (20) comprising
a first sensing element (24) having an X-axis accelerometer,
a second sensing element (26) having a Y-axis accelerometer and
a third sensing element (54) having a Z-axis accelerometer;
the X-axis accelerometer, the Y-axis accelerometer and the Z-axis accelerometer generate analog signals corresponding to the angular inclination of the vehicle relative to the roadway which are transformed into corresponding digital signals representing each such angle;
a pitch angle or inclination of the longitudinal center line of the vehicle relative to the roadway is measured about an X-axis and a roll angle or inclination of the transverse center line of the vehicle relative to the roadway is measured about a Y-axis;
(b) a control means (22) including circuitry to receive said digital signals and to generate a control signal when any of said digital signals exceeds a predetermined value, wherein the control means measures pitch and roll angles of inclination and calculates the pitch and roll angle rates of change to predict when the vehicle will rotate through a predetermined arc about the X-axis or Y-axis; and
(c) an actuator signal generator (52) means including circuitry to receive said control signal and to generate an actuator signal in response thereto to actuate the vehicular safety device.

2. A control device (10) to selectively actuate a vehicle safety device (12, 14, 18) according to claim 1 wherein the sensor means (20) comprises first and second filters (28, 30) to selectively filter the corresponding analog signals from the first and second sensing elements (24, 26) into a first frequency band width corresponding to or representing the angles of inclination to the X-axis and Y-axis relative to the roadway indicative of the pitch and roll condition of the vehicle and a second band width corresponding to or representing acceleration indicative of an impact.

3. A control device (10) to selectively actuate a vehicle safety device (12, 14, 18) according to claim 2 wherein the sensor means (20) includes an A/D converter (32) which receives the first and second frequency analog signals from the first and second filters (28, 30) and converts the first and second frequency analog signals into digital signals.

4. A control device (10) to selectively actuate a vehicle safety device (12, 14,18) according to claim 1 wherein the control means (22) includes a control signal generator means (42) having a first control signal generator to receive the first frequency signals from the first and second filters (28, 30); and a second control signal generator (50) to receive the second frequency signal from the first and second filters; the first control signal generator including a first stage (46) and a second stage (48).

5. A control device (10) to selectively actuate a vehicle safety device (12, 14, 18) according to claim 1 wherein the control means (22) includes an actuator signal generator.

6. A control device (10) to selectively actuate a vehicle safety device (12, 14, 18) according to claim 4 wherein the first stage of the first control signal generator includes logic means to generate a pitch angle signal and a roll angle signal corresponding to the angle of inclination of the vehicle relative to the roadway along the X-axis and Y-axis respectively and the second stage of the first control signal generator includes storage means to store the families of curves shown Figs. 3 and 5 and the maps shown in Figs. 4 and 6 in the specification, and means to generate the rate of change of the pitch angle and rate of change of the roll angle from the pitch and roll angles signals fed from the first stage.

7. A control device (10) to selectively actuate a vehicle safety device (12, 14, 18) according to claim 6 wherein the first control signal generator means further includes logic circuity to generate a first control signal when either the pitch angle and/or pitch angle rate of change each exceeds a predetermined value indicative of a pitch-over condition or when the roll angle and/or roll angle rate of change exceeds a predetermined value indicative of a roll-over condition by comparing the pitch angle and pitch angle rate of change to predetermined values of pitch angle and pitch angle rate of change as depicted by the family of curves of Fig. 3 and the map shown in Fig. 4 and the roll angle and roll angle rate to predetermined values of roll angle and roll angle rate as depicted by the family of curves of Fig. 5 and the map shown in Fig. 6 respectively.

8. A control device (10) to selectively actuate a vehicle safety device (12, 14, 18) according to claim 5 wherein the actuator signal generator means (52) includes logic means to generate an actuator signal to actuate at least one of the vehicular safety devices when the first control signal is received from the first control signal generator means.

9. A control device (10) to selectively actuate a vehicle safety device (12, 14, 18) according to claim 5 wherein the actuator signal generator means (52) further includes logic means to generate a first actuator signal when the first control signal is received from the second control signal generator means to generate a second actuator signal to actuate at least one of the other vehicular safety devices when the second control signal from the second control signal generator means (50) is received.

## Patentansprüche

1. Steuervorrichtung (10), um selektiv ein Fahrzeugsicherheitssystem (12, 14, 18) zu betätigen, die aufweist:
(a) eine Meßfiihlereinrichtung (20), die aufweist:
ein erstes Meßelement (24) mit einem X-Achsen-Beschleuniger,
ein zweites Meßelement (26) mit einem Y-Achsen-Beschleuniger und
ein drittes Meßelement (54) mit einem Z-Achsen-Beschleuniger,
wobei der X-Achsen-Beschleuniger, der Y-Achsen-Beschleuniger und der Z-Achsen-Beschleuniger Analogsignale entsprechend der Winkelneigung des Fahrzeuges relativ zur Fahrbahn erzeugen, die in entsprechende Digitalsignale umgewandelt werden, die jeden derartigen Winkel verkörpern;
wobei ein Längsneigungswinkel oder die Neigung der Längsmittellinie des Fahrzeuges relativ zur Fahrbahn um eine X-Achse herum gemessen wird, und wobei ein Querneigungswinkel oder die Neigung der Quermittellinie des Fahrzeuges relativ zur Fahrbahn um eine Y-Achse herum gemessen wird;
(b) eine Steuereinrichtung (22), die eine Schaltung umfaßt, um Digitalsignale zu empfangen, und um ein Steuersignal zu erzeugen, wenn irgendeines der Digitalsignale einen vorgegebenen Wert übersteigt, worin die Steuereinrichtung die Längs- und Querneigungswinkel mißt und die Änderungsgeschwindigkeiten des Längs- und Querneigungswinkels berechnet, um vorherzusagen, wenn sich das Fahrzeug um einen vorgegebenen Bogen um die X-Achse oder Y-Achse drehen wird; und
(c) eine Betätigungselementsignalgeneratoreinrichtung (52), die eine Schaltung umfaßt, um das Steuersignal zu empfangen, und um ein Betätigungselementsignal als Reaktion darauf zu erzeugen, um das Fahrzeugsicherheitssystem zu betätigen.

2. Steuervorrichtung (10) nach Anspruch 1, um selektiv ein Fahrzeugsicherheitssystem (12, 14, 18) zu betätigen, bei der die Meßfühlereinrichtung (20) einen ersten und zweiten Filter (28, 30) aufweist, um die entsprechenden Analogsignale vom ersten und zweiten Meßelement (24, 26) in eine erste Frequenzbandbreite, die den Neigungswinkeln zur X-Achse und Y-Achse relativ zur Fahrbahn entspricht oder diese verkörpert, die auf den Längs- und Querneigungszustand des Fahrzeuges hinweisen, und eine zweite Bandbreite selektiv zu filtern, die der Beschleunigung entspricht oder diese verkörpert, die auf einen Stoß hinweist.

3. Steuervorrichtung (10) nach Anspruch 2, um selektiv ein Fahrzeugsicherheitssystem (12, 14, 18) zu betätigen, bei der die Meßfühlereinrichtung (20) einen Analog-Digital-Wandler (32) umfaßt, der die ersten und zweiten Frequenzanalogsignale vom ersten und zweiten Filter (28, 30) empfängt und die ersten und zweiten Frequenzanalogsignale in Digitalsignale umwandelt.

4. Steuervorrichtung (10) nach Anspruch 1, um selektiv ein Fahrzeugsicherheitssystem (12, 14, 18) zu betätigen, bei der die Steuereinrichtung (22) eine Steuersignalgeneratoreinrichtung (42) umfaßt, die aufweist: einen ersten Steuersignalgenerator, um die ersten Frequenzsignale vom ersten und zweiten Filter (28, 30) zu empfangen; und einen zweiten Steuersignalgenerator (50), um das zweite Frequenzsignal vom ersten und zweiten Filter zu empfangen, wobei der erste Steuersignalgenerator eine erste Stufe (46) und eine zweite Stufe (48) umfaßt.

5. Steuervorrichtung (10) nach Anspruch 1, um selektiv ein Fahrzeugsicherheitssystem (12, 14, 18) zu betätigen, bei der die Steuereinrichtung (22) einen Betätigungselementsignalgenerator umfaßt.

6. Steuervorrichtung (10) nach Anspruch 4, um selektiv ein Fahrzeugsicherheitssystem (12, 14, 18) zu betätigen, bei der die erste Stufe des ersten Steuersignalgenerators eine Logikeinrichtung umfaßt, um ein Längsneigungswinkelsignal und ein Quemeigungswinkelsignal entsprechend dem Neigungswinkel des Fahrzeuges relativ zur Fahrbahn längs der X-Achse und bzw. der Y-Achse zu erzeugen, und bei der die zweite Stufe des ersten Steuersignalgenerators umfaßt: eine Speichereinrichtung, um die Kurvenscharen, die in Fig. 3 und 5 in der Spezifikation gezeigt werden, und die Abbildungen, die in Fig. 4 und 6 in der Spezifikation gezeigt werden, zu speichern; und eine Einrichtung, um die Änderungsgeschwindigkeit des Längsneigungswinkels und die Änderungsgeschwindigkeit des Quemeigungswinkels aus den Längs- und Querneigungswinkelsignalen zu erzeugen, die von der ersten Stufe zugeführt werden.

7. Steuervorrichtung (10) nach Anspruch 6, um selektiv ein Fahrzeugsicherheitssystem (12, 14, 18) zu betätigen, bei der die erste Steuersignalgeneratoreinrichtung außerdem eine Logikschaltung umfaßt, um ein erstes Steuersignal zu erzeugen, wenn entweder der Längsneigungswinkel und/oder die Änderungsgeschwindigkeit des Längsneigungswinkels jeweils einen vorgegebenen Wert übersteigt, was auf einen übermäßigen Längsneigungszustand hinweist, oder wenn der Querneigungswinkel und/oder die Änderungsgeschwindigkeit des Querneigungswinkels einen vorgegebenen Wert übersteigt, was auf einen übermäßigen Querneigungszustand hinweist, indem der Längsneigungswinkel und die Änderungsgeschwindigkeit des Längsneigungswinkels mit vorgegebenen Werten des Längsneigungswinkels und der Änderungsgeschwindigkeit des Längsneigungswinkels, wie sie durch die Kurvenschar in Fig. 3 und die in Fig. 4 gezeigte Abbildung dargestellt werden, und der Querneigungswinkel und die Querneigungswinkelgeschwindigkeit mit vorgegebenen Werten des Querneigungswinkels und der Querneigungswinkelgeschwindigkeit verglichen werden, wie sie durch die Kurvenschar in Fig. 5 und bzw. die in Fig. 6 gezeigte Abbildung dargestellt werden.

8. Steuervorrichtung (10) nach Anspruch 5, um selektiv ein Fahrzeugsicherheitssystem (12, 14, 18) zu betätigen, bei der die Betätigungselementsignalgeneratoreinrichtung (52) eine Logikeinrichtung umfaßt, um ein Betätigungselementsignal zu erzeugen, um mindestens eines der Fahrzeugsicherheitssysteme zu betätigen, wenn das erste Steuersignal von der ersten Steuersignalgeneratoreinrichtung empfangen wird.

9. Steuervorrichtung (10) nach Anspruch 5, um selektiv ein Fahrzeugsicherheitssystem (12, 14, 18) zu betätigen, bei der die Betätigungselementsignalgeneratoreinrichtung (52) außerdem eine Logikeinrichtung umfaßt, um ein erstes Betätigungselementsignal zu erzeugen, wenn das erste Steuersignal von der zweiten Steuersignalgeneratoreinrichtung empfangen wird, um ein zweites Betätigungselementsignal zu erzeugen, um mindestens eines der weiteren Fahrzeugsicherheitssysteme zu betätigen, wenn das zweite Steuersignal von der zweiten Steuersignalgeneratoreinrichtung (50) empfangen wird.

## Revendications

1. Dispositif de commande (10) destiné à actionner sélectivement un dispositif de sécurité d'un véhicule (12, 14, 18), comprenant:
(a) un moyen capteur (20) comprenant
un premier élément capteur (24) comportant un accéléromètre de l'axe X,
un deuxième élément capteur (26) comportant un accéléromètre de l'axe Y,
un troisième élément capteur (54) comportant u accéléromètre de l'axe Z,
l'accéléromètre de l'axe X, l'accéléromètre de l'axe Y et l'accéléromètre de l'axe Z émettant des signaux analogiques correspondant à l'inclinaison angulaire du véhicule par rapport à la route, qui sont transformés en des signaux numériques correspondants représentant chacun un tel angle;
un angle d'inclinaison longitudinale ou d'inclinaison de la ligne médiane longitudinale du véhicule par rapport à la route étant mesuré autour d'un axe X et un angle d'inclinaison latérale ou d'inclinaison de la ligne médiane transversale du véhicule par rapport à la route étant mesuré autour d'un axe Y;
(b) un moyen de commande (22) englobant un circuit pour recevoir lesdits signaux numériques et pour émettre un signal de commande lorsque l'un quelconque desdits signaux numériques dépasse une valeur prédéterminée, le moyen de commande mesurant les angles d'inclinaison longitudinale et latérale et calculant les vitesses de changement des angles d'inclinaison longitudinale et latérale pour prédire le moment où le véhicule tournera à travers un arc prédéterminé autour de l'axe X ou de l'axe Y; et
(c) un générateur de signaux d'actionnement (52) englobant un circuit pour recevoir ledit signal de commande et pour émettre un signal d'actionnement en réponse à celui-ci, pour actionner le dispositif de sécurité du véhicule.

2. Dispositif de commande (10) destiné à actionner sélectivement un dispositif de sécurité d'un véhicule (12, 14, 18) selon la revendication 1, dans lequel le moyen capteur (20) comprend des premier et deuxième filtres (28, 30) destinés à filtrer sélectivement les signaux analogiques correspondants transmis par les premier et deuxième éléments capteurs (24, 26) en une première largeur de bande de fréquence correspondant aux angles d'inclinaison autour de l'axe X et de l'axe Y par rapport à la route ou représentant ceux-ci, indiquant l'état d'inclinaison longitudinale ou d'inclinaison latérale du véhicule, et en une deuxième largeur de bande correspondant à l'accélération indiquant un impact ou représentant celle-ci.

3. Dispositif de commande (10) destiné à actionner sélectivement un dispositif de sécurité d'un véhicule (12, 14, 18) selon la revendication 2, dans lequel le moyen capteur (20) englobe un convertisseur analogique-numérique (32) recevant les premier et deuxième signaux analogiques de fréquence des premier et deuxième filtres (28, 30) et convertissant les premier et deuxième signaux analogiques de fréquence en des signaux numériques.

4. Dispositif de commande (10) destiné à actionner sélectivement un dispositif de sécurité d'un véhicule (12, 14, 18) selon la revendication 1, dans lequel le moyen de commande (22) englobe un moyen générateur de signaux de commande (42) comportant un premier générateur de signaux de commande pour recevoir les premiers signaux de fréquence des premier et deuxième filtres (28, 30); et un deuxième générateur de signaux de commande (50) pour recevoir le deuxième signal de fréquence des premier et deuxième filtres; le premier générateur de signaux de commande englobant un premier étage (40) et un deuxième étage (48).

5. Dispositif de commande (10) destiné à actionner sélectivement un dispositif de sécurité d'un véhicule (12, 14, 18) selon la revendication 1, dans lequel le moyen de commande (22) englobe un générateur de signaux d'actionnement.

6. Dispositif de commande (10) destiné à actionner sélectivement un dispositif de sécurité d'un véhicule (12, 14, 18) selon la revendication 4, dans lequel le premier étage du premier générateur de signaux de commande englobe un moyen logique pour produire respectivement un signal de l'angle d'inclinaison longitudinale et un signal de l'angle d'inclinaison latérale correspondant à l'angle d'inclinaison du véhicule par rapport à la route le long de l'axe X et de l'axe Y, le deuxième étage du premier générateur de signaux de commande englobant un moyen de mémoire pour mémoriser les groupes de courbe représentés dans les figures 3 et 5 et les graphiques représentés dans les figures 4 et 6 de la description, et un moyen pour déterminer la vitesse de changement de l'angle d'inclinaison longitudinale et de l'angle d'inclinaison latérale sur la base des signaux de l'angle d'inclinaison longitudinale et de l'angle d'inclinaison latérale transmis par le premier étage.

7. Dispositif de commande (10) destiné à actionner sélectivement un dispositif de sécurité d'un véhicule (12, 14, 18) selon la revendication 6, dans lequel le premier moyen générateur de signaux de commande englobe en outre un circuit logique destiné à émettre un premier signal de commande lorsque l'angle d'inclinaison longitudinale et/ou la vitesse de changement de l'angle d'inclinaison longitudinale dépasse une valeur prédéterminée indicatrice d'un état de culbutage ou lorsque l'angle d'inclinaison latérale et/ou la vitesse de changement de l'angle d'inclinaison latérale dépasse une valeur prédéterminée indicatrice d'un état de capotage en comparant respectivement l'angle d'inclinaison longitudinale et la vitesse de changement de l'angle d'inclinaison longitudinale à des valeurs prédéterminées de l'angle d'inclinaison longitudinale et de la vitesse de changement de l'angle d'inclinaison longitudinale représentées par le groupe de courbes de la figure 3 et le graphique représenté dans la figure 4 et l'angle d'inclinaison latérale et la vitesse de changement de l'angle d'inclinaison latérale avec des valeurs prédéterminées de l'angle d'inclinaison latérale et de la vitesse de changement de l'angle d'inclinaison latérale représentées par le groupe de courbes de la figure 5 et le graphique représenté dans la figure 6, respectivement.

8. Dispositif de commande (10) destiné à actionner sélectivement un dispositif de sécurité d'un véhicule (12, 14, 18) selon la revendication 5, dans lequel le moyen générateur de signaux d'actionnement (52) englobe un moyen logique pour émettre un signal d'actionnement destiné à actionner au moins un des dispositifs de sécurité du véhicule lors de la réception du premier signal de commande transmis par le premier moyen générateur de signaux de commande.

9. Dispositif de commande (10) destiné à actionner sélectivement un dispositif de sécurité d'un véhicule (12, 14, 18) selon la revendication 5, dans lequel le moyen générateur de signaux d'actionnement (52) englobe en outre un moyen logique pour émettre un premier signal d'actionnement lors de la réception du premier signal de commande transmis par le deuxième générateur de signaux de commande pour émettre un deuxième signal d'actionnement destiné à actionner au moins un des autres dispositifs de sécurité du véhicule lors de la réception du deuxième signal de commande transmis par le deuxième moyen générateur de signaux de commande (50).
